## Europäisches Patentamt
## European Patent Office
## Office européen des brevets

(11) Veröffentlichungsnummer: **0 209 676**
**B1**

(12) **EUROPÄISCHE PATENTSCHRIFT**

(45) Veröffentlichungstag der Patentschrift: **12.09.90**

(51) Int. Cl.⁵: **G 01 D 5/34,** G 01 D 5/36

(21) Anmeldenummer: **86107165.2**

(22) Anmeldetag: **27.05.86**

(54) **Wegmesseinrichtung.**

(30) Priorität: **23.07.85 DE 3526206**

(43) Veröffentlichungstag der Anmeldung:
**28.01.87 Patentblatt 87/05**

(45) Bekanntmachung des Hinweises auf die
Patenterteilung:
**12.09.90 Patentblatt 90/37**

(84) Benannte Vertragsstaaten:
**AT CH DE FR GB IT LI NL SE**

(56) Entgegenhaltungen:
**EP-A-0 072 549**
**DE-A-2 046 332**
**DE-C-3 204 012**
**FR-A-2 362 364**

(73) Patentinhaber: **DR. JOHANNES HEIDENHAIN GMBH**
**Dr.-Johannes-Heidenhain-Strasse 5 Postfach 1260**
**D-8225 Traunreut (DE)**

(72) Erfinder: **Nelle, Günther, Dr. Ing.**
**Eichenweg 12**
**D-8221 Bergen (DE)**

Courier Press, Leamington Spa, England.

EP 0 209 676 B1

## Beschreibung

Die Erfindung bezieht sich auf eine Wegmeßeinrichtung gemäß dem Oberbegriff des Anspruchs.

Derartige Wegmeßeinrichtungen sind als Längen- oder Winkelmeßeinrichtungen aus dem Stand der Technik hinlänglich bekannt.

So ist beispielsweise in der DE—AS 25 40 412 ein inkrementales Meßsystem beschrieben, das eine Reihe von Referenzmarken aufweist. Mittels eines Schaltelementes kann aus der Vielzahl von Referenzmarken eine beliebige Anzahl ausgewählt werden.

Aus den DE—PS 31 44 334 und DE—PS 30 39 483 ist es darüber hinaus bekannt, den Referenzmarken eine individuelle Kodierung als Identifizierungsmerkmal zuzuordnen.

In der DE—A—20 46 332 ist eine Wegmeßeinrichtung offenbart, bei der es aufgrund von optischen Maßnahmen zu erkennen ist, auf welcher Seite der Referenzmarke sich die Abtasteinrichtung befindet.

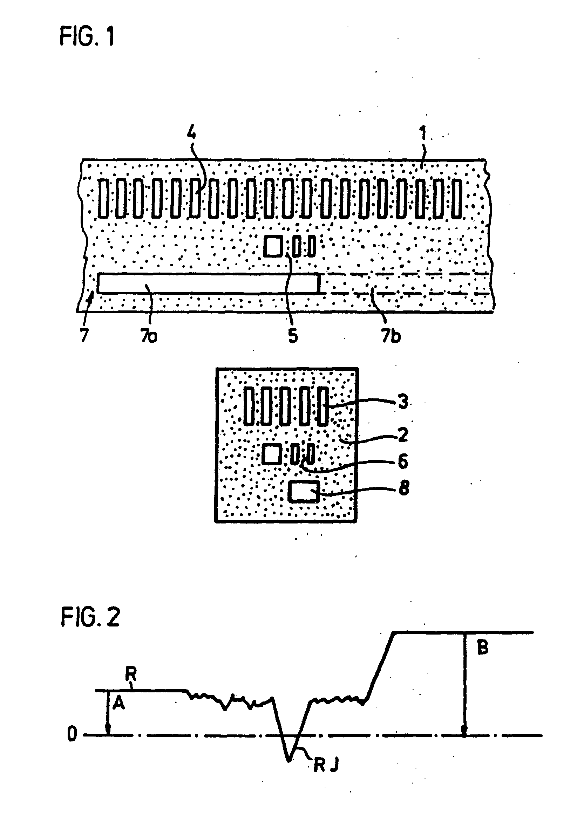

Dazu wird das Gebiet rechts bzw. links von den Referenzmarken lichtundurchlässig gemacht, was den Grundpegel des Referenzsignals verändert. Dieser Stand der Technik ist in den Figuren 1 und 2 sinngemäß gezeigt und beschrieben.

Der Erfindung liegt die Aufgabe zugrunde, eine weitere Wegmeßeinrichtung in schaffen, die eine derartige Lageerkennung ermöglicht.

Diese Aufgabe wird von einer Wegmeßeinrichtung mit den Merkmalen des Anspruchs gelöst.

Mit Hilfe der Zeichnungen soll anhand von Ausführungsbeispielen die Erfindung noch näher erläutert werden.

Es zeigt

Figur 1 einen Maßverkörperungsausschnitt mit zugehöriger Abtasteinrichtung in der Draufsicht;

Figur 2 einen typischen Verlauf eines Referenzsignals;

Figur 3 eine schematisierte Wegmeßeinrichtung in Seitenansicht;

Figur 4 eine Variante einer Wegmeßeinrichtung in Seitenansicht.

In Figur 1 ist aus Gründen der Übersichtlichkeit ein Ausschnitt einer inkrementalen Maßverkörperung 1 und eine zugehörige Abtasteinrichtung 2 stark vereinfacht und nebeneinander angeordnet dargestellt. Im praktischen Meßbetrieb liegt jedoch die Abtasteinrichtung 2 in geringem Abstand über der Maßverkörperung 1 und tastet diese ab, indem die Abtastfelder 3 die Inkremente 4 in Meßrichtung überstreichen, wodurch die Strahlung einer nicht gezeigten Lichtquelle moduliert und von nicht dargestellten Fotoelementen in periodische Abtastsignale umgewandelt wird. Dieses Prinzip ist hinreichend bekannt, hier soll daher nicht näher darauf eingegangen werden.

Neben der Skalenspur mit den Inkrementen 4 trägt die Maßverkörperung 1 noch eine nicht näher bezeichnete Spur mit einer Referenzmarke 5, der auf der Abtasteinrichtung 2 ein eigenes Referenzmarken-Leseelement 6 zugeordnet ist. Selbstverständlich ist aus dem Referenzmarken-Leseelement 6 ein Fotoelement nachgeordnet, das den modulierten Lichtstrom in einen Referenzimpuls umwandelt. Auch das muß hier nicht mehr näher beschrieben werden, denn die Erzeugung von Referenzimpulsen ist bereits aus der DE—OS 18 14 785 bekannt.

Auf der Maßverkörperung 1 ist jedoch noch eine weitere Spur 7 vorgesehen, die von einem separaten Abstastfeld 8 der Abtasteinrichtung 2 abgetastet wird. Die Spur 7 verläuft parallel zu der Skalenspur mit den Inkrementen 4. In der Nähe der Referenzmarke 5 wechselt ihr optisches Verhalten von transparent nach opak, oder von reflektierend nach absorbierend, oder aber auch von nichttransparent nach teildurchlässig. Ein Bereich der Spur 7, hier der lichtdurchlässige Teil, ist mit 7a bezeichnet. Rechts von der Referenzmarke 5 ist ein Bereich lichtundurchlässig und mit 7b bezeichnet. Dem der Spur 7 zugeordneten Abstastfeld 8 ist ebenfalls eine nicht dargestellte Fotoelement nachgeordnet, das durch die Gestaltung der Spur 7 auf einer Seite der Referenzmarke 5 beleuchtet wird, und auf der anderen Seite der Referenzmarke 5 nicht beleuchtet wird.

Da das Fotoelement für die Referenzmarke 5 und das Fotoelement für die Spur 7 elektrisch zusammengeschaltet sind, ergibt sich im Zusammenwirken des Referenzmarken-Leseelementes 6 mit dem Abstastfeld 8 ein Signalverlauf, wie er in Figur 2 dargestellt ist. Solange sich das Referenzmarken-Leseelement 6 und das Abstastfeld 8 links von der Referenzmarke 5 befinden, wird durch die Spur 7a das Abstastfeld 8 beleuchtet, und es wird demgemäß ein Referenzsignal R mit dem Pegel A erzeugt. Im weiteren Verlauf der Abtastbewegung in Meßrichtung von links nach rechts wird die Referenzmarke 5 von ihrem Referenzmarken-Lesefeld 6 vollständige überfahren und es entsteht ein Referenzimpuls RJ. Anschließend gelangt das Abstastfeld 8 in den nicht lichtdurchlässigen Bereich 7b der Spur 7, so daß das dem Abstastfeld 8 zugeordnete Fotoelement nicht beleuchtet wird, und sich ein Signalpegel B am Referenzsignal R einstellt.

Aus den unterschiedlichen Signalpegeln A und B des Referenzsignales R ist also für die Auswerteeinrichtung, die Teil einer numerischen Positionsanzeige oder Steuerung sein kann, erkennbar, ob die Abtasteinrichtung 2 sich rechts oder links von der Referenzmarke 5 befindet.

Die anhand der Figur 1 beschriebene Wegmeßeinrichtung gehört nicht zu den beanspruchten Erfindung.

Diese Erkennung der Position der Abtasteinrichtung 2 relativ zur Referenzmarke 5 ist auch durch andere Schaltmittel als die beschriebenen licht-elektrisch arbeitenden Schaltelemente realisierbar.

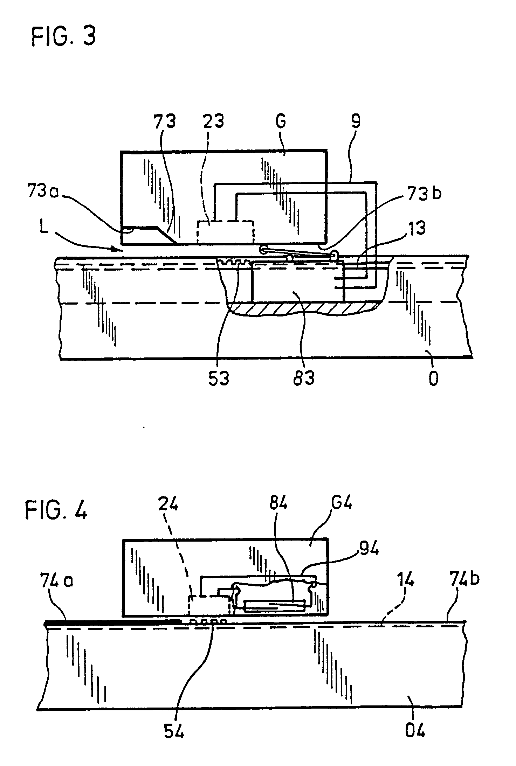

Eine in Figur 3 gezeigte Längenmeßeinrichtung L trägt in einem Hohlprofil O eine Maßverkörperung 13. In einem Gehäuse G ist die Abtasteinrichtung 23 angeordnet und relativ zum Hohlprofil O in Meßrichtung verschiebbar. Eine angedeutete Referenzmarke 53 wird vom nicht dargestellten Referenzmarken-Leseelement in vorbeschriebener Weise abgetastet. Ein Mikroschalter 83 übernimmt bei dieser Ausführungsform die Funktion des Abtastfeldes 8 gemäß Figur 1. Dazu ist am Gehäuse G der Abtasteinrichtung 23 ein Schaltnocken 73 mit den Bereichen 73a und 73b angeordnet. Befindet sich die Abtasteinrichtung 23 rechts von der Referenzmarke 53, so ist der Mikroschalter 83 geöffnet; befindet sie sich links von der Referenzmarke 53, so ist er geschlossen, und dem Referenzsignal wird ein Signal zugeschaltet, was durch die Kabelverbindung 9 zwischen der Abtasteinrichtung 23 und den Mikroschalter 83 angedeutet wird.

In Figur 4 wird eine weitere Variante einer Längenmeßeinrichtung gezeigt. Die baugleichen Elemente sind mit dem Index "4" gekennzeichnet, es sollen hier nur die abweichenden Maßnahmen erläutert werden.

Im Gehäuse G4 für die Abtasteinrichtung 24 ist ein sogenannter Reedschalter 84 angeordnet, der magnetisch beeinflußbar ist. Am Hohlprofil O4 ist im Einflußbereich des Reedschalters 84 als Schaltelement eine Magnetleiste 74a angebracht. Die Magnetleiste 74a reicht auf einer Seite bis in die Nähe der Referenzmarke 54. Befindet sich nun die Abtasteinrichtung 24 links von der Referenzmarke 53, so wird der Reedschalter 84 durch die Wirkung der Magnetleiste 74a geschlossen und dem vorbeschriebenen hier aber nicht gezeigten Referenzmarken-Leseelement wird wieder ein Signal zugeschaltet. Auf der anderen Seite der Referenzmarke 54 öffnet sich der Reedschalter 84 wieder, da im Bereich 74b keinerlei Magnetkräfte auf ihn einwirken. Auf diese Weise werden auch bei dieser Ausführungsform beiderseits der Referenzmarke 54 unterschiedliche Signalpegel erzeugt.

Ebenso ist es möglich, dem Reedschalter an der Abtasteinrichtung einen Magneten zuzuordnen, und durch ein Blech auf einer Seite der Referenzmarke, das zwischen Magnet und Reedschalter greift, einen magnetischen Kurzschluß zu erzeugen, so daß der Reedschalter öffnet.

Der Vollständigkeit halber sei noch erwähnt, daß es völlig ins Belieben des Fachmannes gestellt bleibt, ob er rechts von der Referenzmarke einen niedrigen und links einen hohen Signalpegel vorsieht. Ebenso kann das ganze Referenzsignal invertiert werden. Diese Bedingungen richten sich nach dem gewünschten Anwendungsfall und demgemäß nach den Polaritäten der ausgewählten elektrischen Bauelemente, die zur Realisierung der Erfindung benutzt werden.

Die Erfindung ist sowohl bei Längen- als auch bei Winkelmeßeinrichtungen realisierbar, wobei es gleichgültig ist, welches physikalische Abtastprinzip verwendet wird.

## Patentanspruch

Wegmeßeinrichtung mit einer Maßverkörperung (1, 13, 14) und einer relativ zur Maßverkörperung bewegbaren Abtasteinrichtung (2, 23, 24) zur Abtastung der Maßverkörperung, welche eine Skalenspur als Meßteilung und wenigstens eine weitere Skalenspur (7, 73, 74) mit wenigstens einer Referenzmarke (5, 53, 54) als Referenzmarkenspur aufweist, sowie mit einer mit der Abtasteinrichtung in Verbindung stehenden Auswerteeinrichtung und Schaltmitteln in der Nähe der Referenzmarke, wobei mittels der Referenzmarkenspur ein Referenzsignal (R) erzeugt wird, das beim Abtasten der Referenzmarke als Referenzimpuls eine scharfe Signalspitze (RJ) gegenüber dem Grundpegel aufweist, und daß der Grundpegel des Referenzsignals mit Hilfe der Schaltmittel an der Referenzmarke im Zusammenwirken mit einem Referenzmarken-Leseelement (6) an der Abtasteinrichtung so gesteuert wird, daß sich die Signalhöhe (A) des Grundpegels auf einer Seite des Referenzimpulses merklich von der Signalhöhe (B) des Grundpegels auf der anderen Seite des Referenzimpulses unterscheidet, dadurch gekennzeichnet, daß die Schaltmittel durch einen Nocken (73) und einen Mikroschalter (83) oder einen Reedschalter (84) und eine Magnetleiste (74) gebildet werden.

## Revendication

Dispositif de mésure de trajet comprenant une règle de mesure (1, 13, 14) et un dispositif d'exploration (2, 23, 24) mobile par rapport à la règle de mesure, pour l'exploration de cette denière, laquelle présente une piste servant de graduation de mesure et au moins une autre piste (7, 73, 74) avec au moins une marque de référence servant de piste de marques de référence, ainsi qu'un dispositif d'exploration se trouvant enliaison avec le dispositif d'exploration et des moyens de commutation au voisinage de la marque de référence, un signal de référence (R) étant produit à l'aide de la piste de marque de référence, signal qui, lors de l'exploration de la marque de référence, présente, en tant qu'impulsion de référence, une pointe de signal (RJ) marquée par rapport au niveau de base, le niveau de base du signal de référence étant commandé à l'endroit de la marque de référence, à l'aide des moyens de commutation, en combinaison avec un élément de lecture de marque de référence (6) sur le dispositif d'exploration, de manière que la hauteur de signal (A) du niveau de base différe, d'un côté de l'impulsion de référence, de façon sensible de la de signal (B) du niveau de base sur l'autre côté de l'impulsion de référence, caractérisé par le fait que les moyens de commutation sont constitués par une came (73) et un microrupteur (83) ou par un relais Reed (84) et une barrette magnétique (74).

## Claim

Path measuring device with a scale unit (1, 13, 14) and a sensing device (2, 23, 24) movable relative to the scale unit for sensing the scale unit, which comprises a scale track as a measuring graduation and at least one further scale track (7, 73, 74) with at least one reference mark (5, 53, 54) as reference mark track, as well as a processing device connected to the sensing device and switching means in the vicinity of the reference mark, wherein a reference signal (R) is generated by means of the reference mark track, which has, on sensing the reference mark, a sharp signal peak (RJ) relative to the base level as reference pulse, and so that the base level of the reference signal is so controlled with the aid of the switching means at the reference mark in cooperation with a reference mark reading element (6) on the sensing device that the signal level (A) of the base level on one side of the reference pulse is markedly different from the signal level (B) of the base level on the other side of the reference pulse, characterized in that the switching means are formed by a cam (73) and a micro-switch (83) or a reed switch (84) and a magnetic strip (74).

## FIG. 1

## FIG. 2

FIG. 3

FIG. 4